Europäisches Patentamt

European Patent Office

Office européen des brevets

(11) Numéro de publication: **0 295 177 B1**

(12) **FASCICULE DE BREVET EUROPEEN**

(45) Date de publication de fascicule du brevet: **09.09.92** (51) Int. Cl.⁵: **G09F 9/30**

(21) Numéro de dépôt: **88401373.1**

(22) Date de dépôt: **07.06.88**

(54) **Dispositif de visualisation à plusieurs écrans plats escamotables.**

(30) Priorité: **12.06.87 FR 8708188**

(43) Date de publication de la demande:
**14.12.88 Bulletin 88/50**

(45) Mention de la délivrance du brevet:
**09.09.92 Bulletin 92/37**

(84) Etats contractants désignés:
**DE ES GB IT SE**

(56) Documents cités:
**EP-A- 0 165 838**

(73) Titulaire: **THOMSON-CSF**
**51, Esplanade du Général de Gaulle**
**F-92800 Puteaux(FR)**

(72) Inventeur: **Buisson, Jean-Michel**
**Thomson-CSF SCPI-19, avenue de Messine**
**F-75008 Paris(FR)**
Inventeur: **Soubrier, Jean-Marie**
**Thomson-CSF SCPI-19, avenue de Messine**
**F-75008 Paris(FR)**

(74) Mandataire: **Albert, Claude et al**
**THOMSON-CSF SCPI**
**F-92045 PARIS LA DEFENSE CEDEX 67(FR)**

## Description

L'invention est relative à des dispositifs de visualisation comportant plusieurs écrans plats, plus particulièrement ceux destinés à être utilisés dans les aéronefs, soit en mode de fonctionnement normal, soit en mode secours.

Dans les aéronefs, la visualisation d'informations tels que les variables et paramètres de fonctionnement des divers équipements de bord s'effectue par l'intermédiaire d'instruments traditionnels tels que des cadrans gradués, des compteurs, des afficheurs, etc. mais aussi, de plus en plus, par des images obtenues à l'aide de tubes à rayons cathodiques, d'écrans plasma, de diodes électroluminescentes, de panneaux électroluminescents ou à cristaux liquides. Ces dispositifs de visualisation à images permettant de présenter sur une même surface plusieurs paramètres, soit de manière simultanée, soit de manière successive, soit encore à la demande de l'opérateur, ce qui diminue le nombre d'instruments traditionnels sur le tableau de bord.

Ces dispositifs à images ont aussi l'avantage de pouvoir être placés à une distance éloignée des circuits électroniques qui commandent l'élaboration des images et/ou l'affichage des informations, ce qui facilite leur mise en place à l'endroit le mieux adapté pour l'opérateur.

Les deux aspects mentionnés ci-dessus, savoir la visualisation sur un même écran de plusieurs informations différentes et la commande à distance de l'affichage desdites informations, conduisent à une meilleure utilisation du volume disponible, volume qui est, en principe, réduit au maximum dans un aéronef, notamment à proximité du pilote de l'aéronef.

Dans ce même ordre d'idées, l'invention a pour but de réaliser et de combiner des dispositifs d'affichage de manière à permettre une meilleure utilisation du volume réservé à l'affichage des informations.

Elle a également pour but de réaliser des dispositifs d'affichage qui présentent une première face de visualisation en tant qu'instrument en fonctionnement normal et une face de visualisation pour un fonctionnement à la demande de l'opérateur, notamment en mode secours, cette dernière face étant escamotée en fonctionnement normal.

D'une façon plus générale, l'invention a pour but de réaliser des dispositifs de visualisation comportant plusieurs écrans plats disposés sur plusieurs faces d'un même boîtier, écrans qui sont choisis par l'opérateur ou qui sont présentés automatiquement à l'opérateur en cas d'événements particuliers tels qu'une panne.

L'invention se rapporte à un dispositif de visualisation d'informations caractérisé en ce qu'il comprend un boîtier de forme parallélépipédique, au moins deux écrans plats disposés chacun sur un des côtés dudit boîtier, des moyens de fixation et d'articulation du boîtier de manière à présenter à l'opérateur l'écran approprié, des moyens d'élaboration des signaux de commande des écrans de manière à afficher les informations sur un des deux écrans et des moyens de commutation pour aiguiller les signaux de commande vers l'écran approprié.

Les moyens de commutation sont constitués par un commutateur actionné par l'opérateur du dispositif de visualisation (ou de manière automatique à la suite d'un évènement particulier) et des relais qui reçoivent les signaux des informations à afficher et les aiguillent vers l'un ou l'autre écran en fonction de la position du commutateur.

De préférence, chaque circuit de commande de l'affichage des informations à afficher comprend un circuit décodeur disposé à proximité de l'écran associé dans le boîtier et un système de traitement des informations à afficher disposé à distance dudit boîtier.

D'autres caractéristiques et avantages de la présente invention apparaîtront à la lecture de la description suivante d'un exemple particulier de réalisation, ladite description étant faite en relation avec les dessins en annexe dans lesquels :

- la figure 1 représente une vue en perspective cavalière d'un boîtier dont la face avant est utilisée comme face de visualisation en fonctionnement normal ;
- la figure 2 est une vue en perspective cavalière du même boîtier mais dont la face de dessus est utilisée comme face de visualisation en mode secours après basculement ;
- la figure 3 est un schéma fonctionnel des circuits électroniques servant à l'affichage des informations sur les écrans.

L'invention sera décrite dans une application utilisant des écrans plats à cristaux liquides mais elle peut être mise en oeuvre pour des écrans plats réalisés suivant d'autres technologies.

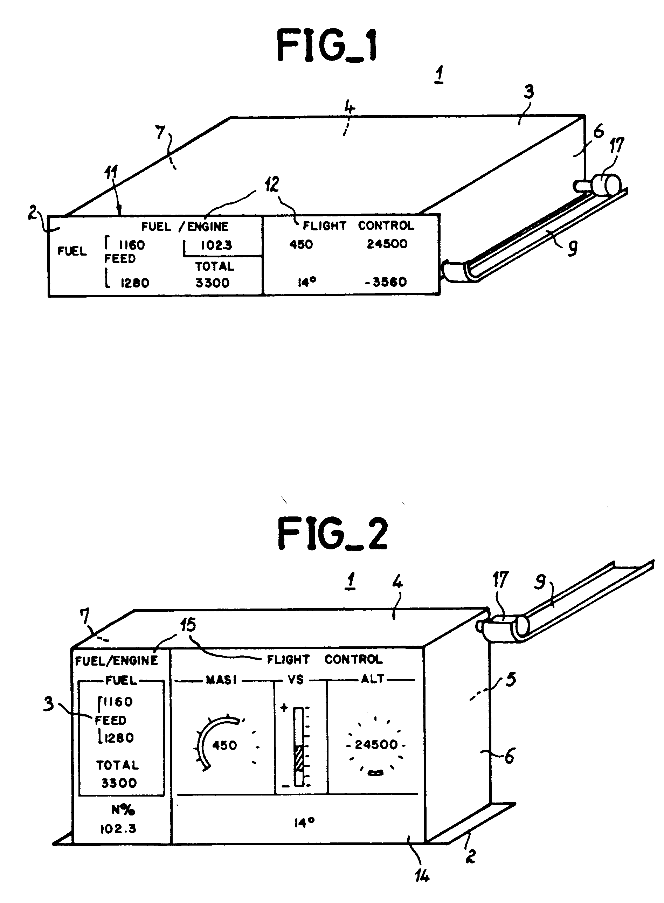

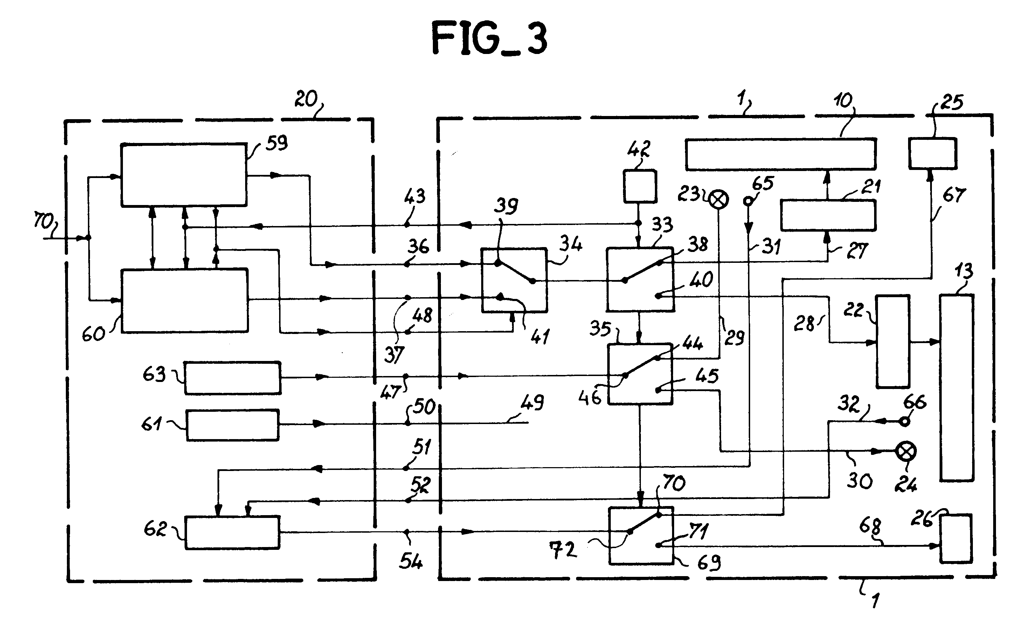

Le dispositif de visualisation selon l'invention comprend (figures 1 et 2), une boîte 1 de forme parallélépipédique rectangle qui a six côtés 2, 3, 4, 5, 6 et 7 et qui est disposée sur un support non représenté comportant des glissières telles que celle référencée 9. En position normale, la boîte 1 est à l'intérieur du support 9 de sorte que le côté 2 constitue la face avant de visualisation qui est représentée sur la figure 1. Les faces latérales 6 et 7 qui, en fonctionnement normal, sont à l'intérieur du support, portent chacune un galet de roulement tel que celui référencé 17 fixé à la face 6 et coopérant avec la glissière 9. Cette face de visualisation 2 en fonctionnement normal comprend une matrice à cristaux liquides 10 (figure 3) pour afficher des informations de variables telles que la vitesse verticale, l'altitude, etc., et un encadrement 11 pour porter des indications 12 donnant la signification des informations (FUEL/ENGINE, FLIGHT CONTROL...).

En cas de défaillance majeure d'un des éléments importants de l'aéronef, il est prévu de ne visualier que certaines informations, celles qui sont absolument nécessaires à la conduite de l'aéronef. Il en est ainsi des informations qui sont affichées sur la face avant 2 de visualisation de la figure 1 mais il faut leur ajouter d'autres informations complémentaires qui, en fonctionnement normal, apparaissent sur des cadrans de type classique.

Selon la présente invention, il est proposé d'afficher ces informations indispensables à l'aide d'un deuxième écran plat qui constitue le côté supérieur 3 de la boîte 1. La figure 2 représente une forme de réalisation de réalisation de ce deuxième écran plat sur lequel on retrouve les mêmes informations de variables que celles affichées sur l'écran disposé sur la face avant 2 (figure 1) mais sur lequel ont été ajoutées d'autres informations visuelles sous forme d'images de cadrans. Par ailleurs, les significations des variables sont indiquées non pas par l'écran proprement dit mais par un encadrement semblable à l'encadrement 11 de la figure 1.

C'est ainsi que ce deuxième écran comprend, comme le premier, une matrice à cristaux liquides 13 qui est associée à une plaque 14 comportant des ouvertures ou fenêtres pour faire apparaître des parties de la matrice 13 qui servent à l'affichage des informations variables. Cette plaque 14 porte des indications 15 des significations des variables qui s'affichent sur la matrice, indications qui sont réalisées par tous moyens connus, par exemple des incrustations luminescentes, ou éclairées par l'arrière, ou encore réflectives.

Bien entendu, les indications peuvent être réalisées à l'aide de la matrice à cristaux liquides elle-même, auquel cas, l'encadrement 11 et la plaque 14 n'ont pas besoin de porter lesdites indications et peuvent être supprimés dans la mesure où ils ne coopèrent pas à la tenue mécanique du boîtier.

Pour mettre en oeuvre ce deuxième écran, l'opérateur doit tirer la boîte 1 vers l'avant pour la faire glisser sur les glissières. En bout de course, la boîte 1 bascule vers le bas autour du galet 17 notamment de sorte que le deuxième écran se met en position verticale face à l'opérateur. Au lieu d'une mise en position verticale par l'opérateur, celle-ci peut être réalisée de manière automatique lors de la survenance d'un évenement particulier telle qu'une panne d'un dispositif d'alimentation.

Les circuits électroniques qui sont directement associés aux écrans plats 10 et 13 comprennent un premier circuit décodeur 21 pour l'écran 10 et un deuxième circuit décodeur 22 pour l'écran 13. Chaque écran 10 ou 13 est éclairé respectivement par un dispositif d'éclairage 23 ou 24, et chauffé respectivement par un dispositif de chauffage 25 ou 26 associé à un thermostat 65 ou 66 de manière que l'écran en marche ait une température toujours supérieure à la température de fonctionnement minimum des cristaux liquides.

Ces différents éléments et dispositifs 21, 22, 23, 24, 25, 26, 65 et 66 sont connectés à des circuits d'élaboration 20 des différents signaux qui sont nécessaires à l'affichage sur les écrans par l'intermédiaire de conducteurs simples ou multiples 27, 28, 29, 30, 31, 32, 67 et 68 et de relais 33, 34, 35 et 69. Les relais 33 et 34 sont connectés en série de manière que le conducteur multiple 27 soit relié à la borne 36 de la boîte 1 par les contacts 38 et 39 dans une position du relais et que le conducteur multiple 28 soit relié à la borne 37 par les contacts 40 et 41 dans une autre position des relais. Le relais 33 est commandé par un commutateur 42 qui est actionné lorsque l'opérateur met en oeuvre la face de visualisation de secours, par exemple en la tirant pour la mettre en position de lecture. Ce commutateur est connecté également à une borne de sortie 43. Le relais 34 est commandé par les circuits d'élaboration 20 par l'intermédiaire de signaux reçus sur la borne 48.

Le relais 35 a une borne 44 qui est connectée au dispositif d'éclairage 23 et une borne 45 qui est connectée au dispositif d'éclairage 24 tandis que la borne commune 46 est connectée à la borne 47 reliée à l'alimentation électrique. Ce relais est, comme le relais 33, commandé par le commutateur 42.

Les conducteurs 31 et 32 relient directement les thermostats 25 et 26 aux bornes de sortie 51 et 52 du boîtier 1.

Les conducteurs 67 et 68 relient respectivement les dispositifs de chauffage 25 et 26 à la borne 54 par l'intermédiaire du relais 69 dont une borne 70 est connectée au conducteur 67, une borne 71 connectée au conducteur 68 et une borne commune 72 connectée à la borne 54. Comme les relais 33 et 35, le relais 69 est commandé par le commutateur 42.

Les différents circuits électroniques décrits succinctement en relation avec la figure 3 sont alimentés par un conducteur 49 connecté à la borne 50 mais les différentes connexions à l'intérieur du boîtier 1 n'ont pas été représentées sur le schéma.

En fonctionnement normal, les contacts des relais 33, 34, 35 et 69 ont la position représentée sur la figure 3 ; lorsque l'opérateur actionne le commutateur 42, soit directement, soit par l'intermédiaire de la manipulation de l'écran de secours, les contacts des relais prennent l'autre position, soit sous l'action directe dudit commutateur pour les relais 33, 35 et 69, soit par l'intermédiaire des circuits d'élaboration 20 qui fournissent un signal sur la borne 48.

Les circuits d'élaboration 20 des différents signaux d'affichage sur les écrans, appelés interfaces, sont également décrits en relation avec la figure 3 sur laquelle on n'a représenté que les éléments nécessaires à la compréhension de l'invention. Ces circuits comprennent essentiellement deux systèmes de traitement identiques 59 et 60 qui fonctionnent en permanence et en parallèle et réalisent une redondance pour améliorer la sécurité de fonctionnement. Ces deux systèmes 59 et 60 élaborent les signaux qui sont appliqués aux circuits décodeurs 21 et 22 par l'intermédiaire des bornes 36 et 37. Ces signaux de sortie sont représentatifs de signaux de mesure du type analogique ou non qui sont fournis par les instruments de mesure disposés à différents endroits de l'aéronef. Ces signaux de mesure sont appliqués simultanément par des conducteurs 70 à chacun des systèmes 59 et 60 qui les transforment en signaux utilisables par les circuits décodeurs 21 et 22.

Les systèmes 59 et 60 sont disponibles dans le commerce et sont en général vendus en association avec l'écran. Bien entendu, certaines adaptations doivent y être apportées, notamment en ce qui concerne leur programmation.

L'interface 20 comprend en outre une alimentation électrique 61, un dispositif de régulation du chauffage 62 des écrans et un dispositif de commande de l'éclairage 63, ces éléments étant de préférence disposés dans l'interface 20 par suite de leur encombrement trop important pour être mis dans le boîtier d'affichage 1. Les éléments 61, 62 et 63 sont connectés à la borne 50 pour l'élément 61, aux bornes 51, 52 et 54 pour l'élément 62 et à la borne 47 pour l'élément 63, du boîtier d'affichage 1.

Il est à remarquer que les thermostats 65 et 66 sont connectés en permanence au dispositif de régulation du chauffage 62 pour fournir l'information de température alors que seul le dispositif de chauffage qui est associé à l'écran en fonctionnement est connecté au dispositif de régulation 62 par suite de l'utilisation du relais 69 pour recevoir le courant de chauffage.

Par ailleurs, les circuits électroniques et les écrans sont polarisés en permanence par le circuit 61 et le conducteur 49 de manière à éviter les effets néfastes d'une commutation brutale lors du changement de mode de fonctionnement.

Le fonctionnement des circuits de la figure 3 est le suivant. En position normale, le système 59 fournit les signaux de commande d'affichage de l'écran 10 par l'intermédiaire de la borne 36, des relais 34 et 33, du conducteur multiple 27 et du circuit décodeur 21. Seul le dispositif d'éclairage 23 est alimenté à l'aide du dispositif 63 via la borne 47, le relais 35 et le conducteur 29. De même, seul le dispositif de chauffage 25 est alimenté par le dispositif de régulation 62 via la borne 54, le relais 69 et le conducteur 67.

En mode secours, par l'effet du commutateur 42 sur les relais 33, 35 et 69, les systèmes 60 ou 59 fournissent les signaux de commande d'affichage de l'écran 13 par l'intermédiaire de la borne 37, des relais 34 et 33, du conducteur multiple 28 et du circuit décodeur 22. Par ailleurs, seul le dispositif d'éclairage 24 est alimenté via le relais 35 et le conducteur 30 et seul le dispositif de chauffage 26 est alimenté via le relais 69 et le conducteur 68.

Le relais 34 ne bascule dans l'autre position que si le système 59 tombe en panne de sorte que les signaux de commande proviennent alors du système 60.

Bien entendu, lorsque le boîtier 1 est remis en place dans les glissières 9, le commutateur 42 actionne les relais 33, 35 et 69 pour aiguiller à nouveau les signaux vers l'écran 10 et les dispositifs associés.

L'exemple particulier de réalisation qui vient d'être décrit comprend un boîtier dont deux des six côtés sont constitués chacun par un écran plat de visualisation. En fonctionnement normal, un seul écran, celui de la face avant 2 est en marche, en mode secours, seul l'écran de la face de dessus 3 est en marche. L'arrangement des circuits électroniques et des écrans est prévu pour améliorer la sécurité, notamment en doublant le système de commande. La consommation électrique a été réduite en n'alimentant les circuits électroniques et les écrans que pour assurer leur polarisation et en ne chauffant que l'écran en fonctionnement. En limitant le nombre de circuits à proximité des écrans, on a obtenu un volume de boîtier aussi réduit que possible, les éléments volumineux étant disposés en un lieu où le volume disponible est plus grand.

Il est clair que l'invention couvre également les cas où plus de deux côtés du boîtier sont utilisés pour supporter des écrans plats, le boîtier étant alors articulé dans un dispositif mécanique qui permet de faire apparaître le côté, et donc l'écran, que l'opérateur choisit ou que le système central veut présenter à l'opérateur. Bien entendu, de tels arrangements impliquent notamment un dispositif mécanique approprié de support de boîtier mais aussi un dispositif de commutation plus compliqué de manière à aiguiller les signaux d'affichage vers le bon écran.

**Revendications**

1. Dispositif de visualisations d'informations caractérisé en ce qu'il comprend un boîter (1) de forme parallélépipédique, au moins deux écrans plats (10, 13) disposés chacun sur un des côtés (2 et 3) dudit boîter (1), des moyens de fixation et d'articulation du boîtier (9, 7) de manière à présenter à l'opérateur l'écran approprié, des moyens d'élaboration (20, 21, 22) des signaux de commande des écrans (10, 13) de manière à afficher les informations sur un des deux écrans (10, 13) et des moyens de commutation (33, 34, 35, 69, 42) pour aiguiller les signaux de commande vers l'écran approprié.

2. Dispositif de visualisation d'informations selon la revendication 1, caractérisé en ce que les moyens d'élaboration des signaux de commnade comprennent un circuit de décodage (21 ou 22) disposé dans le boîtier (1) à proximité de l'écran associé et un système de traitement des informations à afficher (20) disposé à l'extérieur dudit boîter (1).

3. Dispositif de visualisation d'informations selon la revendication 2, caractérisé en ce que le système de traitement des informations à afficher (20) comprend deux circuits identiques (59, 60) qui fonctionnent en permanence et en parallèle mais dont on n'utilise que les signaux de sortie d'un seul circuit.

4. dispositif de visualisation d'informations selon l'une quelconque des revendications précédentes, caractérisé en ce que les moyens de commutation comprennent un commutateur (42) actionné de manière automatique par suite de la survenance d'un événement particulier telle qu'une d'un écran ou par l'opérateur lui-même, et des relais (33, 34) qui reçoivent les signaux de commande des écrans et les aiguillent sur l'un ou l'autre écran (10, 13) en fonction de la position du commutateur (42).

5. Dispositif de visualisation d'informations selon l'une quelconque des revendications précédentes, caractérisé en ce que des moyens de mesure de la température (65, 66) ainsi que des moyens de chauffage (25, 26) commandés par les moyens de mesure de la température sont associés à chaque écran (10, 13), et en ce qu'un relais (69) commandé par le commutateur (42) permet de ne chauffer que l'écran en fonctionnement.

6. Dispositif de visualisation d'informations selon l'une quelconque des revendications précédentes, caractérisé en ce que des moyens d'éclairage (23, 24) sont associés à chaque écran (10, 13) et en ce qu'un relais (35) commandé par le commutateur (42) permet de n'éclairer que l'écran en fonctionnement.

7. Dispositif de visualisation d'informations selon l'une quelconque des revendications précédentes, caractérisé en ce que les dispositifs d'alimentation (61, 62, 63) sont disposés à l'extérieur du boîtier.

## Claims

1. Data viewing device characterised in that it comprises a housing (1) of parallelepipedal shape, at least two flat screens (10, 13) each arranged on one of the sides (2 and 3) of the said housing (1), means of fixing and articulating the housing (9, 7) so as to present the appropriate screen to the operator, means of producing (20, 21, 22) control signals for the screens (10, 13) so as to display the data on one of the two screens (10, 13) and switching means (33, 34, 35, 69, 42) for directing the control signals to the appropriate screen.

2. Data viewing device according to Claim 1, characterised in that the means of producing the control signals comprise a decoding circuit (21 or 22) arranged in the housing (1) in proximity to the associated screen and a system for processing the data to be displayed (20) arranged outside the said housing (1).

3. Data viewing device according to Claim 2, characterised in that the system for processing the data to be displayed (20) comprises two identical circuits (59, 60) which operate permanently and in parallel but of which only the output signals from a single circuit are used.

4. Data viewing device according to any one of the preceding claims, characterised in that the switching means comprise a switch (42) actuated automatically as a result of the occurrence of a particular event such as a breakdown of a screen or by the operator himself, and relays (33, 34) which receive the control signals for the screens and direct them to one or the other screen (10, 13) on the basis of the position of the switch (42).

5. Data viewing device according to any one of the preceding claims, characterised in that means for measuring the temperature (65, 66) as well as heating means (25, 26) controlled by the means for measuring the temperature are associated with each screen (10, 13), and in that a relay (69) controlled by the switch (42) makes it possible to heat only the screen which is in operation.

6. Data viewing device according to any one of the preceding claims, characterised in that illuminating means (23, 24) are associated with each screen (10, 13) and in that a relay (35) controlled by the switch (42) makes it possible to illuminate only the screen which is in operation.

7. Data viewing device according to any one of the preceding claims, characterised in that the power supply devices (61, 62, 63) are arranged outside the housing.

**Patentansprüche**

1. Informationsanzeigevorrichtung, dadurch gekennzeichnet, daß sie ein parallelepipedförmiges Gehäuse (1), mindestens zwei Flachschirme (10, 13), von denen jeder an einer der Seiten (2 und 3) des Gehäuses (1) angeordnet ist, Befestigungsund Schwenkeinrichtungen für das Gehäuse (9, 7), um einer Bedienperson den passenden Schirm darzubieten, Erzeugungseineinrichtungen (20, 21, 22) für die Steuersignale für die Schirme (10, 13), um die Informationen auf einem der beiden Schirme (10, 13) darzustellen, und Umschalteinrichtungen (33, 34, 35, 69, 42) aufweist, um die Steuersignale zu dem passenden Schirm zu leiten.

2. Informationsanzeigevorrichtung nach Anspruch 1, dadurch gekennzeichnet, daß die Erzeugungseinrichtungen für die Steuersignale eine Dekodierschaltung (21 oder 22) aufweisen, die im Gehäuse (1) dicht beim zugeordneten Schirm angeordnet ist, und ein Verarbeitungssystem für die anzuzeigenden Informationen (20), das außerhalb des Gehäuses (1) angeordnet ist.

3. Informationsanzeigevorrichtung nach Anspruch 2, dadurch gekennzeichnet, daß das Verarbeitungssystem für die anzuzeigenden Informationen (20) zwei identische Schaltungen (59, 60) aufweist, die dauernd parallel arbeiten, wobei aber nur die Ausgangssignale einer Schaltung verwendet werden.

4. Informationsanzeigevorrichtung nach einem der vorstehenden Ansprüche, dadurch gekennzeichnet, daß die Umschalteinrichtungen einen Umschalter (42) aufweisen, der automatisch betätigt wird, wenn ein besonderes Ereignis, wie eine Störung eines Schirms, eintritt, oder durch die Bedienperson selbst betätigt wird, und Relais (33, 34) aufweisen, die die Steuersignale für die Schirme empfangen und sie abhängig von der Stellung des Umschalters (42) zu dem einen oder anderen Schirm (10, 13) leiten.

5. Informationsanzeigevorrichtung nach einem der vorstehenden Ansprüche, dadurch gekennzeichnet, daß Temperaturmeßeinrichtungen (65, 66) wie auch von den Temperaturmeßeinrichtungen gesteuerte Heizeinrichtungen (25, 26) jedem Schirm (10, 13) zugeordnet sind, und daß es ein vom Umschalter (42) gesteuertes Relais (69) erlaubt, daß nur der betriebene Schirm beheizt wird.

6. Informationsanzeigevorrichtung nach einem der vorstehenden Ansprüche, dadurch gekennzeichnet, daß Beleuchtungseinrichtungen (23, 24) jedem Schirm (10, 13) zugeordnet sind und daß es ein vom Umschalter (42) gesteuertes Relais (35) erlaubt, daß nur der betriebene Schirm beleuchtet wird.

7. Informationsanzeigevorrichtung nach einem der vorstehenden Ansprüche, dadurch gekennzeichnet, daß die Versorgungsvorrichtungen (61, 62, 63) außerhalb des Gehäuses angeordnet sind.

# FIG_1

| FUEL /ENGINE | | FLIGHT CONTROL | |
|---|---|---|---|
| FUEL FEED [ 1160 | 102.3 | 450 | 24500 |
| [ 1280 | TOTAL 3300 | 14° | -3560 |

# FIG_2

FUEL/ENGINE    FLIGHT CONTROL

FUEL    MASI    VS    ALT

[1160 FEED [1280

TOTAL 3300    450    +    24500

N%
102.3    14°

FIG_3